# EUROPÄISCHE PATENTANMELDUNG

(11) **EP 4 566 707 A1**
(43) Veröffentlichungstag der Anmeldung: **11.06.2025**
(21) Anmeldenummer: 23214157.2
(22) Anmeldetag: 05.12.2023
(51) Int. Cl.: B01J 19/32, B01J 19/24, B01J 23/42, C01B 21/26, C01C 1/02

(54) **KATALYSATORSYSTEM FÜR EINEN STRÖMUNGSREAKTOR SOWIE VERFAHREN ZUR KATALYTISCHEN OXIDATION VON AMMONIAK**

(71) Anmelder: Heraeus Precious Metals GmbH & Co. KG, 63450 Hanau (DE)
(72) Erfinder: Hesse, Jens, 63450 Hanau (DE); Jantsch, Uwe, 63450 Hanau (DE); Bohnenberger, Joerg, 63450 Hanau (DE); Henkes, Oliver, 63450 Hanau (DE)
(74) Vertreter: Heraeus IP

(57) **Zusammenfassung**

Die vorliegende Erfindung betrifft ein Katalysatorsystem für einen Strömungsreaktor, das mindestens zwei Netze umfasst, von denen mindestens eins ein Edelmetallnetz ist. Mindestens eins der Netze weist eine Aussparung auf. Die Erfindung betrifft außerdem einen Reaktor umfassend ein solches Katalysator System sowie ein Verfahren zur katalytischen Oxidation von Ammoniak.

## Beschreibung

Die vorliegende Erfindung betrifft ein Katalysatorsystem für Strömungsreaktoren, das mindestens zwei Netze umfasst, wobei mindestens eins der Netze ein Edelmetallnetz ist. Mindestens eins der Netze weist eine Aussparung auf. Außerdem betrifft die Erfindung einen Reaktor mit einem solchen Katalysatorsystem sowie ein Verfahren zur katalytischen Verbrennung von Ammoniak, bei dem ein mindestens Ammoniak enthaltendes Frischgas durch das Katalysatorsystem geleitet wird.

Katalysatorsysteme im Sinne der vorliegenden Erfindung werden insbesondere für Gasreaktionen verwendet. Sie werden beispielsweise bei der Herstellung von Blausäure nach dem Andrussow-Verfahren oder bei der Herstellung von Salpetersäure nach dem Ostwald-Verfahren eingesetzt. Um für diese Reaktionen eine große katalytisch-aktive Oberfläche bereitzustellen, weisen solche Katalysatoren in der Regel eine räumliche, gasdurchlässige Struktur auf. Auch Auffangsysteme zur Rückgewinnung von verdampften katalytisch aktiven Bestandteilen basieren häufig auf solchen netzförmigen Strukturen. Es werden zweckmäßigerweise meist mehrere Netze hintereinander angeordnet und zu einem Katalysatorsystem zusammengefasst. Die Katalysatornetze bestehen meist aus ein- oder mehrlagigen Gestricken, Gewirken oder Geweben. Die einzelnen Netze bestehen dabei aus feinen Edelmetalldrähten, die überwiegend Platin (Pt), Palladium (Pd), Rhodium (Rh) oder Legierungen dieser Metalle enthalten. Die Wahl des Materials des Edelmetalldrahtes wird unter anderem durch die Position und Funktion des Katalysatornetzes im Katalysatorsystem bestimmt. Vor allem Auffang-Netze können neben Edelmetallen auch weitere Bestandteile wie beispielsweise Nickel enthalten. Um die katalytisch-aktive verfügbare Oberfläche zu erhöhen, weisen die Katalysatornetze häufig neben der planaren Ausdehnung eine dreidimensionale Struktur auf. Je nach Bauart kommen in Strömungsreaktoren Systeme mit 2 bis 50 Katalysator-Netzen mit einem Durchmesser von bis zu 6 m zum Einsatz. Neben edelmetallhaltigen Katalysator-Netzen können solche Katalysatorsysteme auch weitere Netz-Komponenten umfassen, die beispielsweise der Stabilisierung des Gesamtsystems dienen. Solche Netze sind typischerweise aus unedlen Materialien gefertigt, beispielsweise Fe-Cr-AI-Legierung, wie Kanthal oder Megapyr, oder vergleichbaren Stahlvarianten. Netze, die im Stand der Technik zur Anwendung kommen, erstrecken sich vollständig über den gesamten Strömungsquerschnitt des Reaktors.

Die Katalysatorsysteme werden bei hohen Temperaturen (> 800 °C) in den Reaktoren verwendet. Aufgrund der zyklischen Temperaturschwankungen zwischen Raumtemperatur und Betriebstemperatur im Rahmen des Betriebs, inklusive der An- und Abschaltvorgänge, dehnt sich der Reaktor im Betrieb gegenüber dem kalten Grundzustand aus und zieht sich bei der Abkühlung wieder zusammen. Dieser Thermozyklus mit der daraus folgenden Variation des Reaktordurchmessers kann dazu führen, dass sich sowohl die katalytischen Netze als auch die Stütznetze aus der Verankerung rund um den Reaktor herum lösen und/oder dass es zu Rissbildungen in den Netzen kommt. Beide Phänomene bewirken einen Gasschlupf im Reaktor und wirken sich negativ auf die Gesamteffizienz des Verfahrens aus.

Weiterhin kann der Gasvolumenstrom inhomogen über den Querschnittsbereich des Reaktors sein, typischerweise mit einem erhöhten Durchfluss in den Randbereichen des Reaktors und einem verminderten Gasfluss im Zentrum.

Es ist daher wünschenswert, die mechanische Stabilität der Katalysatorsysteme zu verbessern und den Volumenstrom innerhalb der Katalysatorsysteme zu homogenisieren.

Aufgabe der vorliegenden Erfindung war die Bereitstellung eines Katalysatorsystems für einen Strömungsreaktor, bei dem zumindest eins der im Stand der Technik identifizierten Probleme gelöst wird.

Eine weitere Aufgabe bestand in der Bereitstellung eines Reaktors, der das erfindungsgemäße Katalysatorsystem umfasst.

Außerdem lag der Erfindung die Aufgabe zugrunde, ein Verfahren für den Einsatz eines solchen Katalysatorsystems anzugeben.

Gemäß der vorliegenden Erfindung wird zumindest eine der Aufgaben gelöst durch ein Katalysatorsystem für einen Strömungsreaktor, umfassend mindestens zwei Netze, wobei mindestens eins der Netze ein Edelmetallnetz ist und mindestens eins der Netze eine Aussparung aufweist.

Im Rahmen der Erfindung wurde als überraschend erkannt, dass es sich vorteilhaft auf die Stabilität des Katalysatorsystems auswirkt, wenn zumindest eins der Netze nicht die volle Fläche des Reaktors überspannt. Mutmaßlich ermöglicht das Vorhandensein einer solchen Öffnung eine Verringerung von Scherkräften, die bei einem Thermozyklus auf die Netze einwirken. Dadurch wird ein Abreißen der Netze von den Fixierungspunkten an der Reaktorwand oder ein Reißen im Querschnitt der Netze verhindert.

Weiterhin kann mit solchen Katalysatorsystemen die Verteilung des Gasstroms über die Reaktorquerschnittsfläche, insbesondere im Fall von inhomogenen Gasvolumenströmen, optimiert werden. Dies trifft insbesondere im Fall von Netzen zu, die kein Edelmetall enthalten, wie die typischerweise eingesetzten Stütznetze.

Falls es sich bei dem die Aussparung aufweisenden Netz um zumindest ein katalytisch wirksames Edelmetallnetz handelt, lässt sich zudem die katalytische Effizienz des Edelmetalls auf einen inhomogenen Volumenstrom im Reaktor anpassen und gezielt steuern.

Die vorliegende Erfindung betrifft ein Katalysatorsystem für einen Strömungsreaktor. In Strömungsreaktoren werden typischerweise Katalysatoren in Form von gasdurchlässigen Flächengebilden in die Reaktionszone in einer Ebene senkrecht zur Strömungsrichtung des Frischgases eingebaut. Solche gasdurchlässigen Flächengebilde werden meist in Form von Katalysatornetzen eingesetzt. Katalysatorsysteme werden meist mittels Einspannvorrichtungen im Reaktor befestigt, um ein Verrutschen zu vermeiden.

Unter einem Katalysatorsystem wird ein Ensemble von Netzen verstanden, das mindestens ein Katalysatornetz umfasst. Mit anderen Worten umfasst ein Katalysatorsystem einen Stapel von Netzen, bei denen es sich bei mindestens einem Netz mit katalytischer Aktivität handelt. Im vorliegenden Fall handelt es sich bei dem Katalysatornetz um ein Edelmetallnetz. Ein Katalysatorsystem kann auch ein Netz oder mehrere Netze ohne katalytische Funktion umfassen, beispielsweise Catchment-Netze, die zur Rückgewinnung von im Betrieb verdampfenden Edelmetall dienen, oder Stütznetze, die zur Stabilisierung des Katalysatorsystems dienen und typischerweise kein Edelmetall enthalten.

Das Katalysatorsystem weist einen Durchmesser auf, der auf den Einsatz im vorgesehenen Reaktor ausgelegt ist, beispielswiese in einem Bereich von 0,5 m bis 6 m.

Die Netze des Katalysatorsystems können miteinander verbunden sein, beispielsweise durch Verschweißungen an den Rändern, wobei die Verschweißung über den gesamten Randbereich oder nur teilweise und/oder punktuell erfolgen kann. Dabei können alle Netze des Katalysatorsystems miteinander verbunden werden oder, falls das Katalysatorsystem mehr als 2 Netze umfasst, können auch nur Teile der Netze miteinander verbunden sein.

Das erfindungsgemäße Katalysatorsystem umfasst mindestens zwei Netze. Unter einem Netz wird ein ein- oder mehrlagiges gasdurchlässiges Flächengebilde verstanden, wobei das Gebilde eine Vielzahl von miteinander verbundenen Fadenelementen umfasst. Bei den Fadenelementen handelt es sich beispielsweise um Drähte oder Garn. Die Flächenbildung solcher Netze wird durch maschenförmiges Verschlingen eines oder mehrerer Fadenelemente erreicht. Netze können beispielswiese durch Weben, Wirken oder Stricken hergestellt werden. Die Struktur der Netze kann dabei gezielt durch die Verwendung unterschiedlicher Web-, Wirk- oder Strickmuster und/oder unterschiedliche Maschenweiten eingestellt werden.

Die Materialien der mindestens zwei Netze des Katalysatorsystems können gleich oder unterschiedlich sein, es kann sich also bei beiden Netzen um Edelmetallnetze handeln, es kann sich aber auch um ein Edelmetallnetz und ein Nicht-Edelmetallnetz handeln.

Die Form der Netze ist nicht weiter beschränkt, typischerweise werden in Strömungsreaktoren jedoch runde Netze eingesetzt. Je nach Art und Funktion der Netze im Katalysatorsystem weist es unterschiedliche Merkmale bezüglich der Maschenweite, Struktur, sowie der Art und Dimension des Fadenelements auf. Die Maschenweite der Netze liegt üblicherweise im Bereich von unter 3 cm, insbesondere unter 1 cm. Im Rahmen dieser Anmeldung wird bezieht sich die Maschenweite auf den Abstand zwischen den einzelnen Maschen in einem Netz, mit anderen Worten wird unter der Maschenweite der Innenabstand zweier benachbarter Maschenschenkel am Punkt der größten Ausdehnung einer Masche verstanden. Sie beschreibt die Größe der Öffnungen im Netz. Eine kleinere Maschenweite bedeutet hierbei kleinere Öffnungen im Netz.

Bei mindestens einem der Netze des Katalysatorsystems handelt es sich um ein Edelmetallnetz. Mit anderen Worten handelt es sich bei dem Katalysatornetz des Katalysatorsystems um ein Edelmetallnetz.

Bei einem Edelmetallnetz handelt es sich um ein Netz, das mindestens einen Edelmetalldraht enthält. Unter einem Edelmetalldraht wird ein Draht verstanden, der aus mindestens einem Edelmetall besteht oder der einen nennenswerten Anteil (> 50 Gew.-%) an Edelmetall enthält. Unter Edelmetallen wird im Rahmen der vorliegenden Erfindung ein Metall ausgewählt aus der Gruppe bestehend aus Platinmetallen, Gold und Silber verstanden. Unter Platinmetallen sind die Metalle der sogenannten Platingruppe, also Platin (Pt), Palladium (Pd), Iridium (Ir), Rhodium (Rh), Osmium (Os) und Ruthenium (Ru), zu verstehen.

Bevorzugt besteht der Edelmetalldraht aus Platin, einer Platinlegierung, Palladium oder einer Palladiumlegierung. Eine Platinlegierung enthält mehr als 50 Gew.-% Platin, als weitere Legierungsbestandteile sind insbesondere Palladium, Rhodium und Ruthenium zu nennen. Eine Palladiumlegierung enthält mehr als 50 Gew.-% Palladium, als weitere Legierungsbestandteile sind insbesondere Platin, Rhodium, Ruthenium, Nickel, Wolfram und Gold zu nennen. Im Folgenden werden Edelmetallnetze, die einen Edelmetalldraht aus Platin oder einer Platinlegierung umfassen auch als platinhaltige Edelmetallnetze oder kurz Platin-Netze bezeichnet. Edelmetallnetze, die einen Edelmetalldraht aus Palladium oder einer Palladiumlegierung umfassen, werden auch als palladiumhaltige Edelmetallnetze oder Palladium-Netze bezeichnet.

Bevorzugt besteht der Edelmetalldraht aus einer Legierung ausgewählt aus der Gruppe bestehend aus Platin mit 1 - 15 Gew.-% Rhodium, Platin mit 1 - 15 Gew.-% Rhodium und 0,1 - 20 Gew.-% Palladium, Platin mit 1 - 15 Gew.-% Rhodium, 0,1 - 20 Gew.-% Palladium und 0,1 - 5 Gew.-% Ruthenium, Platin mit 1 - 15 Gew.-% Rhodium, 0,1 - 40 Gew.-% Palladium und 0,001 - 5 Gew.-% Iridium, Platin mit 1 - 15 Gew.-% Rhodium, 0,1 - 20 Gew.-% Palladium und 0,001 - 5 Gew.-% Tantal, Platin mit 1 - 15 Gew.-% Rhodium, 0,001 - 5 Gew% Iridium und 0,001 - 5 Gew.-% Tantal, Palladium mit 1 - 25 Gew.-% Platin, Palladium mit 1 - 25 Gew.-% Platin und 1 - 15 Gew.-% Rhodium, Palladium mit 1 - 25 Gew.-% Wolfram, Palladium mit 1 - 15 Gew.-% Nickel, Palladium mit 0,001 - 5 Gew.-% Rhodium, Palladium mit 1 - 15 Gew.-% Kupfer, Palladium mit 1 - 15 Gew.-% Kupfer und 1 - 15 Gew.-% Nickel und Palladium mit 1 - 30 Gew.-% Cobalt, Palladium mit 0,001 - 10 % Gew.-% Rhodium und 3 - 30 Gew.-% mindestens eines weiteren Metalls, wobei das mindestens eine weitere Metall ausgewählt ist aus der Gruppe bestehend aus Nickel, Wolfram, Platin und Gold. Die hierin beschriebenen Edelmetalllegierungen können Verunreinigungen enthalten. Unter einer Verunreinigung ist vorliegend eine beabsichtige oder durch die Herstellung der Legierung oder der Legierungen bedingte und unvermeidbare Verunreinigung zu verstehen. Sofern nicht anders angegeben, beträgt der Anteil der Verunreinigungen in der Summe maximal 1 Gew.-% bei allen beschriebenen Edelmetalllegierungen bezogen auf das Gesamtgewicht der jeweiligen Edelmetalllegierung, bevorzugt maximal 0,5 Gew.-%.

Wenn im Rahmen dieser Anmeldung Bereiche genannt werden, so gelten die Bereichsgrenzen als beinhaltet.

In bevorzugten Ausführungsformen handelt es sich bei dem mindestens einen Edelmetallnetz um ein platinhaltiges Edelmetallnetz oder ein palladiumhaltiges Edelmetallnetz, besonders bevorzugt um ein platinhaltiges Edelmetallnetz.

Vorzugsweise werden Edelmetalldrähte eingesetzt, die einen Durchmesser von 40 - 250 µm aufweisen, bevorzugt von 50 - 200 µm, besonders bevorzugt 60 - 150 µm. Der Edelmetalldraht kann als Runddraht, das heißt mit einem runden Querschnitt, ausgebildet sein. In einer anderen Ausführung kann der Draht als abgeflachter Runddraht oder als Draht mit einem anderen Querschnitt ausgeführt werden.

Der Edelmetalldraht kann eine zwei- oder dreidimensionale Struktur aufweisen. Beispielsweise kann der Edelmetalldraht einen oder mehrere wellenförmige, treppenförmige oder helixförmig ausgebildete Längenabschnitte umfassen oder als über die gesamte Länge als wellenförmiger, treppenförmiger oder helixförmig gebogener Draht ausgebildet sein. Bei Verwendung solcher Edelmetalldrähte kann das daraus gefertigte Katalysatornetz eine dreidimensionale Struktur aufweisen.

Der Edelmetalldraht kann mehrere Drähte, in diesem Fall auch als Filamente bezeichnet, umfassen, die bevorzugt miteinander verdrillt sein können. Die Filamente können alle aus dem gleichen Material bestehen, d.h. alle edelmetallhaltig sein, oder aus unterschiedlichen Materialien bestehen, die wiederum nicht alle edelmetallhaltig sein müssen. Die Filamente können miteinander verdrillt sein, in diesen Fällen weisen die Edelmetalldrähte eine seilartige Struktur auf.

In vielen Fällen kann es vorteilhaft sein, dass das Edelmetallnetz aus zwei oder mehr Edelmetalldrähten gebildet wird. In diesen Fällen können die mindestens zwei Edelmetalldrähte aus dem gleichen Material oder aus unterschiedlichen Materialien bestehen. Die mindestens zwei Edelmetalldrähte können den gleichen oder unterschiedliche Durchmesser und/oder die gleiche oder unterschiedliche Struktur aufweisen.

Das Edelmetallnetz kann vollständig aus Edelmetalldraht oder Edelmetalldrähten bestehen, es kann aber auch weitere Bestandteile umfassen, beispielsweise Drähte oder Garn aus NichtEdelmetallen oder nicht-metallischen Materialien. Beispiele für nicht-metallische Materialien sind organische und keramische Materialien.

Das Flächengewicht des Edelmetallnetzes ist nicht weiter beschränkt, es kann beispielsweise im Bereich von 100 bis 950 g/m² liegen, insbesondere im Bereich von 150 bis 800 g/m².

Auch die Maschenweite des Edelmetallnetzes ist nicht weiter beschränkt, sie kann beispielsweise im Bereich von 0,01 bis 10 mm liegen, insbesondere im Bereich von 0,1 bis 5 mm, besonders bevorzugt im Bereich von 0,5 bis 3 mm.

Die Anzahl der verwendeten Edelmetallnetze im Katalysatorsystem, insbesondere der Katalysatornetze, hängt von den Bedingungen ab, bei denen der Strömungsreaktor betrieben wird. Die Anzahl der Edelmetallnetze kann beispielsweise im Bereich von 5 bis 50 liegen, je nach Druck können 5 bis 10 oder auch 20 bis 50 Edelmetallnetze eingesetzt werden.

Das Katalysatorsystem kann eine Edelmetallnetz-Gruppe oder mehrere Edelmetallnetz-Gruppen umfassen. Unter einer Edelmetallnetz-Gruppe wird ein Ensemble von Edelmetallnetzen verstanden, das aus mindestens einem Edelmetalldraht der gleichen Zusammensetzung gebildet wird. Typischerweise umfasst eine Katalysatornetzgruppe mehr als ein Edelmetallnetz, beispielsweise 2 bis 10 Edelmetallnetze.

Bevorzugte Katalysatorsysteme weisen eine Edelmetallnetz-Gruppe mit platinhaltigen Edelmetallnetzen und eine Edelmetallnetz-Gruppe mit palladiumhaltigen Edelmetallnetzen auf.

In bevorzugten Ausführungsformen kann das erfindungsgemäße Katalysatorsystem mindestens ein edelmetallfreies Netz umfassen. Das edelmetallfreie Netz umfasst keinen Draht oder Drähte, die Edelmetall enthalten, es umfasst also nur edelmetallfreie Drähte. Bei solchen edelmetallfreien Netzen kann es sich beispielsweise um Stütznetze handeln. Stütznetze können eingesetzt werden, um einer Kompression benachbarter Edelmetallnetz-Gruppen unter Druckbelastung entgegenzuwirken oder um eine Auflagefläche für Edelmetallnetze zu liefern. Im ersten Fall werden solche Netze auch als Trennnetze *(engl. separator screens)* bezeichnet. Edelmetallfreie Netze, insbesondere Trenn- oder Stütznetze, verfügen vorzugsweise über eine im Vergleich zu Edelmetallnetzen eingeschränkte Flexibilität.

Typischerweise haben das Edelmetallnetz und ein weiteres edelmetallfreies Netz die gleiche Größe und/oder Form.

Als edelmetallfreie Netze eignen sich beispielsweise Netze aus einem hitzebeständigen Stahl, typischerweise einer FeCrAI-Legierung wie Megapyr oder Kanthal, Edelstahl oder aus hitzebeständigen Legierungen wie beispielsweise Nickel-Chrom-Legierungen. Als besonders vorteilhaft haben sich Stütznetze aus Megapyr oder Kanthal herausgestellt.

Vorzugsweise werden edelmetallfreie Drähte eingesetzt, die einen Durchmesser von 0,01 - 3 mm aufweisen, bevorzugt von 0,1 - 2 mm. Typischerweise ist der Durchmesser der edelmetallfreien Drähte größer als der Durchmesser der Edelmetalldrähte. Der edelmetallfreie Draht kann als Runddraht, das heißt mit einem runden Querschnitt, ausgebildet sein. In einer anderen Ausführung kann der Draht als abgeflachter Runddraht oder als Draht mit einem anderen Querschnitt ausgeführt werden.

Das Flächengewicht des edelmetallfreien Netzes ist nicht weiter beschränkt, es kann beispielsweise im Bereich von 0,05 bis 3 kg/m² liegen, insbesondere im Bereich von 0,01 bis 1 kg/m². Typischerweise ist das Flächengewicht des edelmetallfreien Netzes höher als das Flächengewicht des Edelmetallnetzes oder der Edelmetallnetze.

Auch die Maschenweite des edelmetallfreien Netzes ist nicht weiter beschränkt, sie kann beispielsweise im Bereich von 0,01 bis 10 cm liegen, insbesondere im Bereich von 0,05 bis 1 cm. Typischerweise ist die Maschenweite des edelmetallfreien Netzes größer als die Maschenweite des Edelmetallnetzes oder der Edelmetallnetze.

Das oder die edelmetallfreien Netze können oberhalb- oder unterhalb des mindestens einen Edelmetallnetzes angeordnet sein (bezogen auf die Strömungsrichtung eines Frisch-Gases im Strömungsreaktor), innerhalb von Edelmetallnetz-Gruppen und/oder zwischen unterschiedlichen Edelmetallnetz-Gruppen. Es hat sich als vorteilhaft für die Stabilität von Katalysatorsystemen erwiesen, wenn zwischen unterschiedlichen Edelmetallnetz-Gruppen mindestens ein edelmetallfreies Netz angeordnet ist.

Mindestens eins der Netze des erfindungsgemäßen Katalysatorsystems weist eine Aussparung auf. Unter einer Aussparung wird eine definierte und lokal begrenzte, freie Fläche innerhalb eines ansonsten homogenen Netzes verstanden. Bei der Aussparung handelt es sich dementsprechend nicht um ein zufälliges Loch in ansonsten homogenen Netzen, sondern um eine bewusst eingebrachte Öffnung.

Die Aussparung ist typischerweise um ein Vielfaches größer als die Maschenweite des Netzes das die Aussparung aufweist, beispielsweise um einen Faktor von mindestens 10, bevorzugter um einen Faktor von mindestens 100, besonders bevorzugt um einen Faktor von mindestens 500.

Bevorzugt beträgt die Querschnittsfläche der Aussparung mindestens 5 % der Querschnittsfläche des Katalysatorsystems, insbesondere mindestens 10 %, besonders bevorzugt mindestens 25 %.

Bei dem Netz, das die Aussparung aufweist, kann es sich um das mindestens eine Edelmetallnetz handeln, die Aussparung kann sich aber auch in einem edelmetallfreien Netz befinden. Es hat sich herausgestellt, dass insbesondere die Rissbildung im Katalysatorsystem reduziert wird, wenn mindestens ein Edelmetallnetz eine Aussparung aufweist. Falls ein edelmetallfreies Netz des Katalysatorsystems die Aussparung aufweist, wirkt sich dies als besonders vorteilhaft auf die Stabilität der Systeme gegenüber den Thermozyklen im Reaktorbetrieb aus.

Die Form der Aussparung ist nicht weiter beschränkt., sie kann die gleiche Form wie Katalysatorsystem aufweisen oder eine andere Form aufweisen, beispielsweise kann die Aussparung rund, oval, polygonal, insbesondere rechteckig, quadratisch, dreieckig oder pentagonal sein.

Bevorzugt ist die Aussparung konzentrisch im Katalysatorsystem angeordnet, mit anderen Worten befindet sich die Aussparung vorzugsweise in der Mitte des sie aufweisenden Netzes.

Besonders bevorzugt handelt es sich bei dem Netz, das die Aussparung aufweist um ein ringförmiges Netz, also ein rundes Netz mit einer kreisförmigen konzentrisch angeordneten Aussparung.

Es kann vorteilhaft sein, wenn ein Netz mehrere Aussparungen aufweist, ebenso kann das Katalysatorsystem mehrere Netze umfassen, die mindestens eine Aussparung aufweisen. In solchen Fällen können die Aussparungen übereinander oder versetzt voneinander angeordnet sein.

Falls das Katalysatorsystem mehr als zwei Netze aufweist, kann das die Aussparung aufweisende Netz außen oder in der Mitte des Netzpaketes, also zwischen weiteren Netzen, angeordnet sein.

Das Katalysatorsystem kann auch ein weiteres Netz oder mehrere weitere Netze umfassen, die einen kleineren Durchmesser als die übrigen Netze des Katalysatorsystems aufweisen. Solche Netze können beispielsweise aufliegend oberhalb der mindestens einen Aussparung angeordnet sein. Bei einem solchen Netz kann es sich um ein Edelmetallnetz oder ein edelmetallfreies Netz handeln. Solche Netze ermöglichen, das Katalysatorsystem variabler zu gestalten, das Durchströmungsverhalten weiter zu optimieren und gleichzeitig die Vorteile der Netze mit Aussparung zu nutzen. Ein Edelmetallnetz eignet sich in diesem Fall besonders, um die katalytische Aktivität innerhalb des Katalysatorsystems zu optimieren und die volle Reaktorfläche zur katalytischen Reaktion zu nutzen. Ein edelmetallfreies Netz ermöglicht, ein Durchsacken der Edelmetallnetze in der Mitte des Katalysatorpakets zu verhindern.

Vorteilhafte Katalysatorsysteme umfassen beispielsweise mindestens ein Edelmetallnetz mit Aussparung und ein Edelmetallnetz ohne Aussparung. Besonders vorteilhaft sind solche Systeme, wenn das Edelmetallnetz mit Aussparung zwischen zwei weiteren Edelmetallnetzen oder Edelmetallnetzgruppen angeordnet ist; das Katalysatorsystem umfasst in solchen Fällen also mindestens 3 Edelmetallnetze. Solche Edelmetallnetz-Gruppen können auch mehr als 3 Netze umfassen. Bei solchen Edelmetallnetzen kann es sich um die Netze einer Edelmetallnetz-Gruppe oder um Netze unterschiedlicher Edelmetallnetz-Gruppen handeln.

Insbesondere vorteilhaft sind Katalysatorsysteme, die mindestens zwei unterschiedliche Edelmetallnetze oder Edelmetallnetz-Gruppen aufweisen, von denen ein Edelmetallnetz oder eine Edelmetallnetz-Gruppe eine Platinlegierung und das andere Edelmetallnetz oder die andere Edelmetallnetz-Gruppe eine Palladium-Legierung aufweist.

In einer besonders bevorzugten Ausführungsform umfasst das Katalysatorsystem eine PlatinNetzgruppe, die ein Platin-Netz mit Aussparung umfasst, gefolgt von einem edelmetallfreien Stütznetz ohne Aussparung, gefolgt von einer Palladium-Netzgruppe ohne Palladium-Netze mit Aussparung und einem abschließenden edelmetallfreien Netz, das wiederum eine Aussparung aufweisen kann.

Weitere vorteilhafte Beispiele für erfindungsgemäße Katalysatorsysteme umfassen mindestens ein Edelmetallnetz ohne Aussparung und ein edelmetallfreies Netz mit einer Aussparung. Bei dem oder den Edelmetallnetzen handelt es sich insbesondere um ein platinhaltiges Edelmetallnetz oder ein palladiumhaltiges Edelmetallnetz, bei dem edelmetallfreien Netz um ein Stütznetz aus einem hitzebeständigen Stahl. Insbesondere vorteilhaft sind Katalysatorsysteme, die mindestens zwei unterschiedliche Edelmetallnetze oder Edelmetallnetz-Gruppen aufweisen, von denen ein Edelmetallnetz oder eine Edelmetallnetz-Gruppe eine Platinlegierung und das andere Edelmetallnetz oder die andere Edelmetallnetz-Gruppe eine Palladium-Legierung aufweist. In solchen Fällen ist das Palladium-Netz, die Palladium-Netzgruppe oder ein Teil der Palladium-Netzgruppe besonders vorteilhaft zwischen dem Platin-Netz oder der Platinnetzgruppe und dem edelmetallfreien Netz mit Aussparung angeordnet. Besonders geeignete Katalysatorsysteme umfassen zwischen den Edelmetallnetz-Gruppen und/oder innerhalb einer Edelmetallnetz-Gruppe ebenfalls edelmetallfreie Netze, die mit oder ohne Aussparung ausgeführt sein können.

In einer besonders bevorzugten Ausführungsform umfasst das Katalysatorsystem eine PlatinNetzgruppe ohne Platin-Netze mit Aussparung, gefolgt von einem edelmetallfreien Stütznetz ohne Aussparung, gefolgt von einer Palladium-Netzgruppe ohne Palladium-Netze mit Aussparung und einem abschließenden edelmetallfreien Netz, das eine Aussparung aufweist.

Weitere Ausführungsformen für erfindungsgemäße Katalysatorsysteme umfassen mindestens ein Edelmetallnetz ohne Aussparung, ein edelmetallfreies Netz mit einer Aussparung und ein über der Aussparung angeordnetes edelmetallfreies Netz mit einem kleineren Durchmesser als das gesamte Katalysatorsystem. Bei dem oder den Edelmetallnetzen handelt es sich insbesondere um ein platinhaltiges Edelmetallnetz oder ein um ein palladiumhaltiges Edelmetallnetz, bei dem Stütznetz und dem über der Aussparung angeordneten Netz um Netze aus einem hitzebeständigen Stahl. Insbesondere vorteilhaft sind in diesem Fall Katalysatorsysteme, die mindestens zwei unterschiedliche Edelmetallnetze oder Edelmetallnetz-Gruppen aufweisen, von denen ein Edelmetallnetz oder eine Edelmetallnetz-Gruppe eine Platinlegierung und das andere Edelmetallnetz oder die andere Edelmetallnetz-Gruppe eine Palladium-Legierung aufweist. In solchen Fällen ist das Palladium-Netz, die Palladium-Netzgruppe oder ein Teil der Palladium-Netzgruppe besonders vorteilhaft zwischen dem Platin-Netz oder der Platinnetzgruppe und den edelmetallfreien Netzen angeordnet. Besonders geeignete Katalysatorsysteme umfassen zwischen den Edelmetallnetz-Gruppen und/oder innerhalb einer Edelmetallnetz-Gruppe ebenfalls edelmetallfreie Netze, die mit oder ohne Aussparung ausgeführt sein können.

Ebenso vorteilhaft kann ein Katalysatorsystem sein, das ein Edelmetallnetz mit Aussparung und ein edelmetallfreies Netz ohne eine Aussparung aufweist. Bei dem Edelmetallnetz handelt es sich insbesondere um ein platinhaltiges Edelmetallnetz oder ein palladiumhaltiges Edelmetallnetz, bei dem edelmetallfreien Netz um ein Stütznetz aus einem hitzebeständigen Stahl. Insbesondere vorteilhaft sind Katalysatorsysteme, die mindestens zwei unterschiedliche Edelmetallnetze oder Edelmetallnetz-Gruppen aufweisen, von denen ein Edelmetallnetz oder eine Edelmetallnetz-Gruppe eine Platinlegierung und das andere Edelmetallnetz oder die andere Edelmetallnetz-Gruppe eine Palladium-Legierung aufweist. In solchen Fällen ist das Palladium-Netz, die Palladium-Netzgruppe oder ein Teil der Palladium-Netzgruppe besonders vorteilhaft zwischen dem Platin-Netz oder der Platinnetzgruppe und dem edelmetallfreien Netz angeordnet. Besonders geeignete Katalysatorsysteme umfassen zwischen den Edelmetallnetz-Gruppen und/oder innerhalb einer Edelmetallnetz-Gruppe ebenfalls edelmetallfreie Netze, die mit oder ohne Aussparung ausgeführt sein können.

Weitere Ausführungsformen für erfindungsgemäße Katalysatorsysteme umfassen mindestens ein Edelmetallnetz mit Aussparung, ein edelmetallfreies Netz ohne Aussparung und ein über der Aussparung angeordnetes Edelmetallnetz mit einem kleineren Durchmesser als das gesamte Katalysatorsystem. Bei dem oder den Edelmetallnetzen handelt es sich insbesondere um ein platinhaltiges Edelmetallnetz oder ein um ein palladiumhaltiges Edelmetallnetz, bei dem Stütznetz und dem über der Aussparung angeordneten Netz um Netze aus einem hitzebeständigen Stahl. Insbesondere vorteilhaft sind in diesem Fall Katalysatorsysteme, die mindestens zwei unterschiedliche Edelmetallnetze oder Edelmetallnetz-Gruppen aufweisen, von denen ein Edelmetallnetz oder eine Edelmetallnetz-Gruppe eine Platinlegierung und das andere Edelmetallnetz oder die andere Edelmetallnetz-Gruppe eine Palladium-Legierung aufweist. In solchen Fällen ist das Palladium-Netz, die Palladium-Netzgruppe oder ein Teil der Palladium-Netzgruppe besonders vorteilhaft zwischen dem Platin-Netz oder der Platinnetzgruppe und den edelmetallfreien Netzen angeordnet. Besonders geeignete Katalysatorsysteme umfassen zwischen den Edelmetallnetz-Gruppen und/oder innerhalb einer Edelmetallnetz-Gruppe ebenfalls edelmetallfreie Netze, die mit oder ohne Aussparung ausgeführt sein können.

Ebenso kann es vorteilhaft sein, wenn das die Aussparung aufweisende Edelmetallnetz und das kleinere Edelmetallnetz zwischen weiteren Edelmetallnetzen angeordnet sind, die keine Aussparung aufweisen. Bei solchen Edelmetallnetzen handelt es sich bevorzugt um die Netze einer Edelmetallnetz-Gruppe, mit anderen Worten umfasst eine solche vorteilhafte Edelmetallnetz-Gruppe mindestens 4 Netze, wobei zwei Netze ohne Aussparung ein Edelmetallnetz mit Aussparung und ein Edelmetallnetz mit kleinerem Durchmesser umschließen. Solche Edelmetallnetz-Gruppen können auch mehr als 4 Netze umfassen.

In einer besonders bevorzugten Ausführungsform umfasst das Katalysatorsystem eine PlatinNetzgruppe, die ein Platin-Netz mit Aussparung und ein Platin-Netz mit kleinerem Durchmesser umfasst, gefolgt von einem edelmetallfreien Stütznetz ohne Aussparung, gefolgt von einer Palladium-Netzgruppe ohne Netze mit Aussparung und einem abschließenden edelmetallfreien Netz, das wiederum eine Aussparung aufweisen kann.

Auch weitere Kombinationen der hierin beschriebenen Ausführungsformen sind möglich.

Die vorliegende Erfindung betrifft außerdem einen Reaktor umfassend ein erfindungsgemäßes Katalysatorsystem. Für bevorzugte Ausführungsformen des Katalysatorsystems sei auf die vorangegangenen Ausführungen verwiesen.

Im Betrieb treten Gase in Strömungsrichtung durch einen Einlass im Reaktor ein, strömen dann durch das Katalysatorsystem und im Anschluss aus dem Boden des Reaktors heraus. Typischerweise wird das Katalysatorsystem in die Reaktionszone eines Strömungsreaktors in einer Ebene senkrecht zur Strömungsrichtung des Frischgases eingebaut. Das Katalysatorsystem kann so angeordnet sein, dass das Netz mit Aussparung im Strömungsrichtung vorne positioniert ist, es kann aber auch weiter hinten in Strömungsrichtung positioniert sein.

Bevorzugt handelt es sich bei dem Reaktor um einen Ammoniakoxidationsreaktor. Die Größe des Reaktors variiert, typischerweise handelt es sich jedoch um einen gewölbten zylindrischen Behälter mit einem Innendurchmesser von 0,5 bis 6 m.

Der Reaktor kann über weitere Komponenten verfügen, beispielsweise über Trägerstrukturen oder Fixierstrukturen für das Katalysatorsystem, weitere Katalysatoreinheiten oder Kühlvorrichtungen.

Die vorliegende Erfindung betrifft außerdem ein Verfahren zur katalytischen Oxidation von Ammoniak, bei dem ein Ammoniak enthaltendes Frischgas über ein erfindungsgemäßes Katalysatorsystem geleitet wird. Für bevorzugte Ausführungsformen des Katalysatorsystems sei auf die vorangegangenen Ausführungen verwiesen.

Das erfindungsgemäße Katalysatorsystem ist insbesondere zur Herstellung von Salpetersäure nach dem Ostwald-Verfahren geeignet. Dabei wird das Katalysatorsystem von einem Ammoniak-Sauerstoff-Gemisch durchströmt, mit anderen Worten handelt es sich dabei um eine katalytische Ammoniakverbrennung.

Das erfindungsgemäße Katalysatorsystem ist außerdem zur Herstellung von Blausäure nach dem Andrussow-Verfahren geeignet. Dabei wird das Katalysatorsystem von einem Ammoniak-Methan-Sauerstoff-Gemisch durchströmt.

Bevorzugt liegt der Ammoniakgehalt des Frischgases zwischen 9,5 und 12 Vol.-%. Der Druck des Frischgases beträgt bevorzugterweise zwischen 1 und 14 bar, insbesondere zwischen 3 und 10 bar. Die Katalysatorsystemtemperatur liegt bevorzugt im Bereich von 500 bis 1300 °C, bevorzugt im Bereich von 800 bis 1100 °C.

Bevorzugterweise wird das Frischgas mit einem Durchsatz im Bereich von 6 bis 60 tN/m²d durch ein Katalysatorsystem gemäß der vorliegenden Erfindung geleitet. Die Abkürzung "tN/m²d" steht dabei für "Tonnen Stickstoff (aus Ammoniak) pro Tag und normierter effektiver Querschnittsfläche des Katalysatorsystems von einem Quadratmeter.

Nachfolgend wird die Erfindung anhand von Abbildungen und Ausführungsbeispielen erläutert. Gleiche Bezugszeichen bezeichnen dabei gleiche Komponenten in unterschiedlichen Ausführungsformen; sie sind nicht bei jeder Ausführungsform explizit genannt. Die Darstellungen sind weder maßstabsgetreu noch geben sie die beschriebenen Größenverhältnisse korrekt wieder.

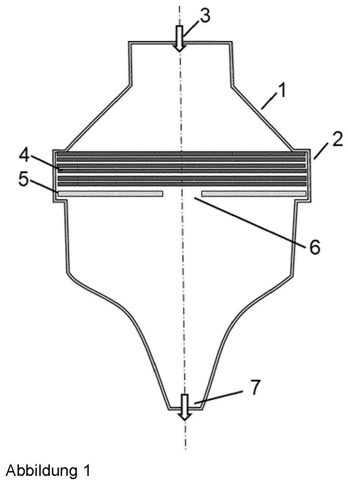

**Abbildung 1** zeigt schematisch einen senkrecht positionierten Strömungsreaktor (1) zur heterogen-katalytischen Verbrennung von Ammoniak. Das Katalysatorsystem (2) bildet die eigentliche Reaktionszone des Strömungsreaktors (1). Das gezeigte Katalysatorsystem (2) umfasst mehrere, in Strömungsrichtung (3) des Frischgases hintereinander angeordnete Netze (4, 5). Das Katalysatorsystem (2) umfasst eine Katalysatornetzgruppe (4) und ein darunter angeordnetes edelmetallfreies Stütznetz (5), das eine zentral positionierte Aussparung (6) aufweist.

Das Frischgas ist beispielsweise ein Ammoniak-Luftgemisch, das auf eine Vorheiztemperatur erwärmt und von oben in den Reaktor (1) unter erhöhten Druck eingeleitet wird. Beim Eintritt in das Katalysatorsystem (2) erfolgen eine Zündung des Gasgemischs und eine anschließende exotherme Verbrennungsreaktion. Dabei findet folgende Hauptreaktion statt:

4 NH₃ + 5O₂ → 4 NO + 6 H₂O

Dabei wird Ammoniak (NH₃) zu Stickstoffmonoxid (NO) und Wasser (H₂O) umgesetzt. Das gebildete Stickstoffmonoxid (NO) reagiert im abströmenden Reaktionsgasgemisch (symbolisiert durch den die Strömungsrichtung des abströmenden Reaktionsgasgemischs anzeigenden Richtungspfeil 7) mit überschüssigem Sauerstoff zu Stickstoffdioxid (NO₂), das mit Wasser in einer nachgeschalteten Absorptionsanlage (nicht gezeigt) zu Salpetersäure (HNOs) umgesetzt wird.

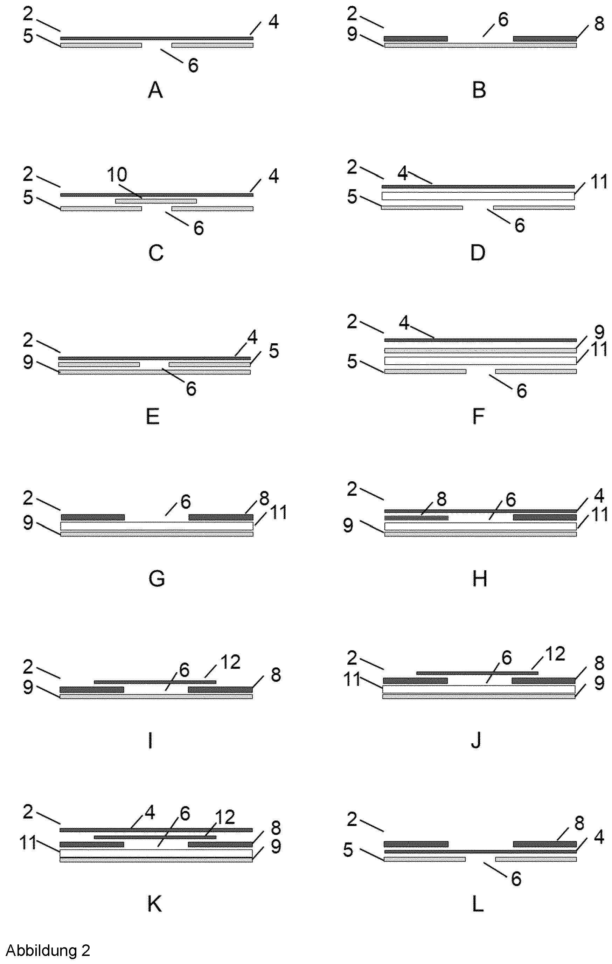

**Abbildung 2** zeigt in Seitenansicht einen Querschnitt von Ausführungsformen erfindungsgemäßer Katalysatorsysteme (2). Vorliegend können alle Netze einen runden Querschnitt haben, das Netz mit Aussparung ist dabei jeweils ringförmig. Andere Formen der Netze und Aussparung sind aber ebenso denkbar. Einzeln gezeigte Netze können auch jeweils Netz-Gruppen darstellen, also eine Packung von mehreren Netzen gleicher Art. Bei den Edelmetallnetzen kann es sich beispielsweise um platinhaltige oder palladiumhaltige Netze oder Netz-Gruppen handeln, bei den edelmetallfreien Netzen oder Netz-Gruppen beispielsweise um Kanthal-Netze.

Abb. 2 A zeigt ein Katalysatorsystem (2), das ein edelmetallfreies Netz (5) mit einer Aussparung (6) und ein Edelmetallnetz (4) umfasst. Abb. 2 B zeigt ein Katalysatorsystem (2), in dem ein Edelmetallnetz (8) eine Aussparung (6) aufweist und über einem edelmetallfreien Netz ohne Aussparung (9) angeordnet ist. In der Ausführungsform gemäß Abb. 2 C ist über einem edelmetallfreien Netz (5) mit Aussparung (6) ein weiteres kleineres edelmetallfreies Netz (10) angeordnet. Die in Abb. 2 D gezeigte Ausführungsform umfasst zwei Edelmetallnetz-Typen (4, 11) über einem edelmetallfreien Netz (5) mit Aussparung (6). Das Katalysatorsystem aus Abb. 2 E umfasst ein zusätzliches edelmetallfreies Netz (9), das keine Aussparung aufweist. Ein edelmetallfreies Netz (5) mit Aussparung (6) ist zwischen diesem Netz (9) und einem Edelmetallnetz (4) angeordnet. Das System gemäß Abb. 2 F entspricht der Konfiguration aus Abb. 2 D, umfasst jedoch ein zusätzliches edelmetallfreies Netz (9), das zwischen den unterschiedlichen Edelmetallnetzen (4, 11) angeordnet ist. Das System gemäß Abb. 2 G entspricht der Konfiguration aus Abb. 2 B, umfasst jedoch ein zusätzliches Edelmetallnetz (11), das zwischen dem edelmetallfreien Netz (9) und dem Edelmetallnetz (8) angeordnet ist. In der in Abb. 2 H gezeigten Konfiguration ist dieses System um ein weiteres Edelmetallnetz (4) erweitert, welches das Katalysatorsystem in eine Richtung abschließt und keine Öffnung aufweist. Das Katalysatorsystem aus Abb. 2 I entspricht der in Abb. 2 B gezeigten Konfiguration und umfasst ein zusätzliches Edelmetallnetz (12), das einen kleineren Durchmesser aufweist und oberhalb der Öffnung (6) des Edelmetallnetzes (8) angeordnet ist. Ein solches System kann ebenfalls über weitere Edelmetallnetze (11) verfügen, wie in Abb. 2 J dargestellt. In einer zusätzlichen Erweiterung kann das System mit einem weiteren Edelmetallnetz (4) abgeschlossen werden (Abb. 2 K). Auch eine Kombination von mehreren Netzen mit Aussparung (5, 8) ist möglich, wie in Abb. 2 L gezeigt.

## Patentansprüche

1. Katalysatorsystem für einen Strömungsreaktor, umfassend mindestens zwei Netze,
wobei mindestens eins der Netze ein Edelmetallnetz ist,
**dadurch gekennzeichnet, dass** mindestens eins der Netze eine Aussparung aufweist.

2. Katalysatorsystem gemäß Anspruch 1, wobei es sich bei dem Edelmetallnetz um ein platinhaltiges Edelmetallnetz oder ein palladiumhaltiges Edelmetallnetz handelt.

3. Katalysatorsystem gemäß einem der Ansprüche 1 oder 2, wobei die Aussparung um einen Faktor von mindestens 10 größer ist als die Maschenweite des Netzes mit Aussparung.

4. Katalysatorsystem gemäß einem der vorangegangenen Ansprüche, wobei die Querschnittsfläche der Aussparung mindestens 5 % der Querschnittsfläche des Katalysatorsystems beträgt.

5. Katalysatorsystem gemäß einem der vorangegangenen Ansprüche, wobei die Aussparung konzentrisch im Katalysatorsystem angeordnet ist.

6. Katalysatorsystem gemäß einem der vorangegangenen Ansprüche, wobei das Katalysatorsystem ein weiteres Netz umfasst, das einen kleineren Durchmesser als die übrigen Netze des Katalysatorsystems aufweist.

7. Katalysatorsystem gemäß einem der vorangegangenen Ansprüche, wobei das Katalysatorsystem mindestens ein edelmetallfreies Netz umfasst.

8. Katalysatorsystem gemäß Anspruch 7, wobei das edelmetallfreie Netz die Aussparung aufweist.

9. Katalysatorsystem gemäß einem der Ansprüche 7 oder 8, wobei die Maschenweite des edelmetallfreien Netzes größer ist als Maschenweite des mindestens einen Edelmetallnetzes.

10. Katalysatorsystem gemäß einem der Ansprüche 7 bis 9, wobei das Flächengewicht des edelmetallfreien Netzes höher als das Flächengewicht des mindestens einen Edelmetallnetzes.

11. Katalysatorsystem gemäß einem der vorangegangenen Ansprüche, wobei das Katalysatorsystem mehrere Edelmetallnetz-Gruppen umfasst.

12. Reaktor umfassend ein Katalysatorsystem gemäß einem der Ansprüche 1 bis 11.

13. Verfahren zur katalytischen Oxidation von Ammoniak, bei dem ein mindestens Ammoniak enthaltendes Frischgas durch ein Katalysatorsystem gemäß einem der Ansprüche 1 bis 11 geleitet wird.
